# EUROPEAN PATENT APPLICATION

(11) **EP 4 765 259 A1**
(43) Date of publication of application: **24.06.2026**
(21) Application number: 24860239.3
(22) Date of filing: 07.08.2024
(51) Int. Cl.: H01M 8/04119

(54) **FUEL CELL HUMIDIFIER OF WHICH HOLLOW FIBER MEMBRANES CAN BE LENGTH-ADJUSTED, AND FUEL CELL HUMIDIFIER OF WHICH GAPS BETWEEN HOLLOW FIBER MEMBRANES CAN ADJUSTED**

(30) Priority: 01.09.2023 KR 20230116337
(71) Applicant: Kolon Industries, Inc., Seoul 07793 (KR)
(72) Inventor: LEE, Ah Reum, Seoul 07793 (KR); OH, Young Seok, Seoul 07793 (KR); LEE, Ji Yoon, Seoul 07793 (KR)
(74) Representative: Vossius & Partner Patentanwälte Rechtsanwälte mbB
(86) International application number: PCT/KR2024/011695
(87) International publication number: WO 2025/048318

(57) **Abstract**

A humidifier for a fuel cell with a length of a hollow fiber membrane or a gap between hollow fiber membranes, which is adjusted in response to an internal temperature of the humidifier changing with an output condition of the fuel cell, includes a housing, the hollow fiber membrane located inside the housing and inside of which dry air flows and outside of which moist air flows, and a potting material located at opposite ends of the hollow fiber membrane and fixing a terminal end of the hollow fiber membrane, in which a first temperature-sensitive volume-changing member that expands and contracts according to temperature is inserted into the potting material such that, with respect to the first temperature-sensitive volume-changing member, the potting material is divided into an inner potting material located on an inner side of the housing and an outer potting material located on an outer side of the housing and spaced apart from the inner potting material.

## Description

### Technical Field

The present disclosure relates to a fuel cell humidifier. More specifically, the present disclosure relates to a humidifier for a fuel cell in which a length of a hollow fiber membrane or a gap between hollow fiber membranes is adjustable in response to an internal temperature of the humidifier, which changes according to an output condition of the fuel cell.

### Background Art

Fuel cells refer to power-generating batteries that produce electricity by combining hydrogen with oxygen. Unlike general chemical cells such as batteries, storage batteries, etc., fuel cells may continuously produce electricity as long as hydrogen and oxygen are supplied, and are twice as efficient as internal combustion engines because there is no heat loss.

Moreover, fuel cells emit low levels of pollutants because chemical energy generated by the combination of hydrogen and oxygen is directly converted into electrical energy. Thus, fuel cells are not only environmentally friendly, but also reduce concerns about resource depletion due to increasing energy consumption.

Fuel cells are classified based on the type of an electrolyte used. Among them, polymer electrolyte fuel cells are known to be the most promising for both small-scale stationary power generation equipment and transportation systems, due to their ability to operate at lower temperatures than other fuel cells and their high power density, which enables miniaturization.

One of the important factors for improving the performance of the polymer electrolyte fuel cell is maintaining a moisture content by supplying a certain amount of moisture to a polymer electrolyte membrane or proton exchange membrane (PEM) of a membrane-electrode assembly (MEA). This is because when the polymer electrolyte membrane dries, power generation efficiency rapidly decreases.

Therefore, the role of humidifiers that humidify polymer electrolyte membranes is essential and highly important. Among them, a membrane humidification method, which uses a membrane that selectively transmits only water vapor to humidify the polymer electrolyte membrane, is advantageous in that it enables a lighter and more compact humidifier to be made.

When forming a module, a selective permeable membrane used in the membrane humidification method may preferably be a hollow fiber membrane with a large permeation area per unit volume. In other words, when manufacturing a humidifier using a hollow fiber membrane, the high integration of the hollow fiber membrane with a large contact surface area enables sufficient humidification of fuel cells even with small volumes.

However, there are limitations arising from densely packing hollow fiber membrane bundles into a housing for the high integration of the hollow fiber membrane and from potting opposite ends of the hollow fiber membrane.

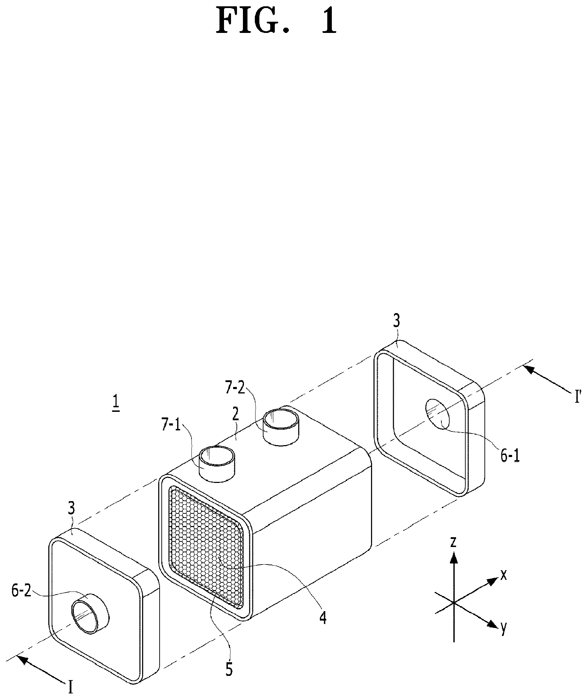

First, FIG. 1 is a perspective view of a general membrane humidifier 1 for a fuel cell. A housing 2 may be provided with a cap 3 at each end, and a bundle of hollow fiber membranes 4 may be included in the housing 2 and fixed by a potting material 5.

The cap 3 on a side may be provided with a dry air inlet 6-1, and the cap 3 on the other side may include a dry air outlet 6-2, such that dry air entering through the dry air inlet 6-1 passes through the hollow fiber membrane 4 and is discharged through the dry air outlet 6-2, flowing into a fuel cell stack (not shown).

An outer circumferential surface of the housing 2 may be provided with a moist air inlet 7-1 and a moist air outlet 7-2., and unreacted humidified gas discharged from the fuel cell stack may enter the housing 2 through the moist air inlet 7-1 to humidify the dry air flowing through the hollow fiber membrane 4 and then exit through the moist air outlet 7-2.

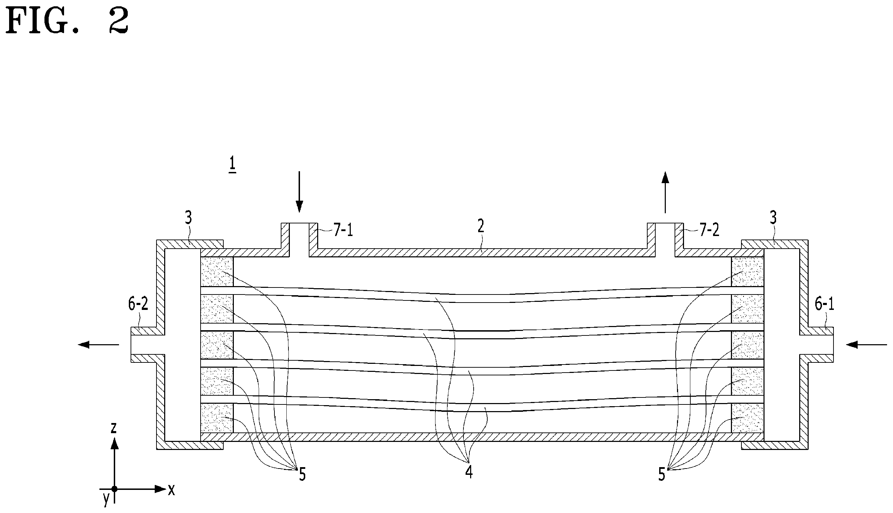

Next, FIG. 2 is a cross-sectional view of the membrane humidifier for the fuel cell shown in FIG. 1, cut along line I-I'. Referring to FIG. 2, problems of general membrane humidifiers for fuel cells may be identified.

The membrane humidifier 1 for the fuel cell may include the bundle of the hollow fiber membranes 4 in the housing 2 for high integration in which opposite ends of the hollow fiber membranes 4 are fixed to the potting material 5.

The hollow fiber membrane 4 may be formed of a polymer material, such that when exposed to a high-temperature, high-humidity environment during operation of the humidifier 1, the length of the hollow fiber membrane 4 increases and the elongated hollow fiber membrane 4 then vibrates due to the flow of incoming air.

As the length of the hollow fiber membrane 4 increases, a vibration amplitude increases and a stress intensity applied to the hollow fiber membrane 4 increases, thereby increasing the likelihood of damage to the hollow fiber membrane 4. Therefore, it is crucial to appropriately reduce or pull the increasing length of the hollow fiber membrane 4 to prevent vibration, but the hollow fiber membrane 4 is fixed at opposite ends thereof by the potting material 5, and the potting material 5 is fixed to the housing 2, making a length change difficult.

As another issue, referring again to FIG. 1, the hollow fiber membrane 4 is built in the housing 2 in a bundle form, causing humidification due to the inflow of moist air to occur primarily on the outer side of the bundle of the hollow fiber membranes 4, resulting in insufficient humidification reaching the inner side of the bundle.

Thus, technological development remains necessary to improve the humidification efficiency and durability of membrane humidifiers for fuel cells.

### Disclosure of Invention

### Technical Problem

The present disclosure is made to solve the foregoing problems and provides a membrane humidifier for a fuel cell in which a length of a hollow fiber membrane is adjustable according to an operating state of the fuel cell.

The present disclosure also provides a membrane humidifier for a fuel cell in which a gap between hollow fiber membranes is adjustable according to an operating state of the fuel cell.

### Solution to Problem

To solve the foregoing problems, according to an aspect of the present disclosure, a humidifier for a fuel cell with an adjustable length hollow fiber membrane includes a housing, the hollow fiber membrane located inside the housing and inside of which dry air flows and outside of which moist air flows, and a potting material located at opposite ends of the hollow fiber membrane and fixing a terminal end of the hollow fiber membrane, in which a first temperature-sensitive volume-changing member that expands and contracts according to temperature is inserted into the potting material such that, with respect to the first temperature-sensitive volume-changing member, the potting material is divided into an inner potting material located on an inner side of the housing and an outer potting material located on an outer side of the housing and spaced apart from the inner potting material.

In an embodiment of the present disclosure, the inner potting material may be spaced apart from the housing with a gap therebetween in such a way as to move in a longitudinal direction of the hollow fiber membrane along with expansion and contraction of the first temperature-sensitive volume-changing member.

In an embodiment of the present disclosure, the outer potting material may be fixed to the housing.

In an embodiment of the present disclosure, the first temperature-sensitive volume-changing member may contract as temperature rises and expand as temperature falls.

In an embodiment of the present disclosure, the first temperature-sensitive volume-changing member may include at least any one selected from a group consisting of poly(N-isopropylacrylamide) (poly(NIPAM)), poly(N-isopropylacrylamide-co-allylamine) (poly(NIPAM-co-AA)), poly(N-isopropyl acrylamide-co-2-(dimethylamino)ethyl methacrylate) (poly(NIPAM-co-DMAEMA)), poly(N-isopropyl acrylamide-co-2-(dimethylamino)ethyl acrylate), poly(NIPAM-co-DMAEA)), poly(N-isopropyl acrylamide-co-acrylic acid), poly(NIPAM-co-AAc)), poly(N-isopropyl acrylamide-co-methacrylic acid) (poly(NIPAM-co-MAAc)), poly(N,N-diethylacrylamide), poly(N-vinylcaprolactam), poly(ethylene glycol), and poly(ethylene glycol-b-propylene glycol-b-ethylene glycol).

To solve the foregoing problems, according to another aspect of the present disclosure, a humidifier for a fuel cell with an adjustable gap between hollow fiber membranes includes a housing, the hollow fiber membrane located inside the housing and inside of which a first fluid flows and outside of which a second fluid flows, and a potting material located at opposite ends of the hollow fiber membrane and fixing a terminal end of the hollow fiber membrane, in which a second temperature-sensitive volume-changing member that expands and contracts according to temperature is inserted into the potting material such that the potting material is divided into a plurality of pieces that move toward or away from each other about an axis parallel to a longitudinal direction of the hollow fiber membrane along with expansion and contraction of the second temperature-sensitive volume-changing member.

In an embodiment of the present disclosure, a third temperature-sensitive volume-changing member that expands and contracts according to temperature may be inserted between the potting material and the housing in such a way as to surround the potting material.

In an embodiment of the present disclosure, the second temperature-sensitive volume-changing member may expand as temperature rises and contract as temperature falls.

In an embodiment of the present disclosure, the second temperature-sensitive volume-changing member may have a thermal expansion coefficient that is at least 50 % greater than a thermal expansion coefficient of the potting material.

In an embodiment of the present disclosure, the third temperature-sensitive volume-changing member may contract as temperature rises and expand as temperature falls.

In an embodiment of the present disclosure, the third temperature-sensitive volume-changing member may include at least any one selected from a group consisting of poly(N-isopropylacrylamide) (poly(NIPAM)), poly(N-isopropylacrylamide-co-allylamine) (poly(NIPAM-co-AA)), poly(N-isopropyl acrylamide-co-2-(dimethylamino)ethyl methacrylate) (poly(NIPAM-co-DMAEMA)), poly(N-isopropyl acrylamide-co-2-(dimethylamino)ethyl acrylate), poly(NIPAM-co-DMAEA)), poly(N-isopropyl acrylamide-co-acrylic acid), poly(NIPAM-co-AAc)), poly(N-isopropyl acrylamide-co-methacrylic acid) (poly(NIPAM-co-MAAc)), poly(N,N-diethylacrylamide), poly(N-vinylcaprolactam), poly(ethylene glycol), and poly(ethylene glycol-b-propylene glycol-b-ethylene glycol).

### Advantageous Effects of Invention

With the above-described configuration and combining relationships of the present disclosure, the length of a hollow fiber membrane may be adjusted according to an operating state of a fuel cell, thereby alleviating stress on the hollow fiber membrane and thus improving the durability of a membrane humidifier for the fuel cell.

Moreover, a gap between hollow fiber membranes may be adjusted according to the fuel cell's operating state, enabling effective humidification throughout the inner side of a bundle of the hollow fiber membranes during a high-power operation of the fuel cel, while lowering humidification efficiency during a low-power operation of the fuel cell to reduce condensate formation.

### Brief Description of Drawings

FIG. 1 is a perspective view of a general membrane humidifier for a fuel cell.
FIG. 2 is a cross-sectional view of the membrane humidifier for the fuel cell shown in FIG. 1, cut along line I-I'.
FIG. 3 illustrates an example of a membrane humidifier for a fuel cell with an adjustable length hollow fiber membrane, where view (a) shows an exploded perspective and view (b) shows a partially enlarged perspective.
FIG. 4 is a cross-sectional view of a portion cut along line I-I' of FIG. 3.
FIG. 5 is a partially enlarged view of the cross-sectional view of FIG. 4.
FIG. 6 is a partially enlarged view showing a difference with respect to a temperature in an example of a membrane humidifier for a fuel cell with an adjustable length hollow fiber membrane, according to the present disclosure.
FIG. 7 illustrates an example of a membrane humidifier for a fuel cell with an adjustable gap between hollow fiber membranes, where view (a) shows an exploded perspective and view (b) shows a partially enlarged perspective.
FIG. 8 is a cross-sectional view showing a difference with respect to a temperature for a cross-section cut along line II-II' of FIG. 7 in which view (a) of FIG. 8 is a cross-sectional view in a relatively-low temperature environment due to a low-power operation of a fuel cell and view (b) of FIG. 8 is a cross-sectional view in a relatively-high temperature environment due to a high-power operation of a fuel cell.
FIG. 9 is a cross-sectional view showing a modified example of a membrane humidifier for a fuel cell with an adjustable gap between hollow fiber membranes, according to the present disclosure.

### Mode for the Invention

The present specification clearly defines the scope of the present disclosure, describes the principles of the present disclosure, and discloses embodiments to allow those of ordinary skill in the art to carry out the present disclosure. The disclosed embodiments may be implemented in various forms.

The term "include", "may include", or the like used in various embodiments of the present disclosure is to indicate the presence of functions, operations, elements, etc., disclosed therein, and does not preclude the presence or addition of one or more functions, operations, elements, etc. Moreover, it should be understood that the term "include", "have", or the like used in various embodiments of the present disclosure is to indicate the presence of features, numbers, steps, operations, elements, parts, or a combination thereof described in the specifications, and does not preclude the presence or addition of one or more other features, numbers, steps, operations, elements, parts, or a combination thereof.

When an element is referred to as being "connected, coupled" to or by any other element, it should be understood that the element may be directly connected or coupled by the other element, but another new element may also be interposed between the element and the other element. Contrarily, when an element is referred to as being "directly connected" or "directly coupled" to or by any other element, it should be understood that there is no new another element between the element and the other element.

Terms such as first, second, etc., used in the present specification may be used to describe various components, but the elements should not be limited to those terms. These terms may be used to distinguish one component from another component.

Hereinafter, preferred embodiments of the present disclosure will be described with reference to the accompanying drawings.

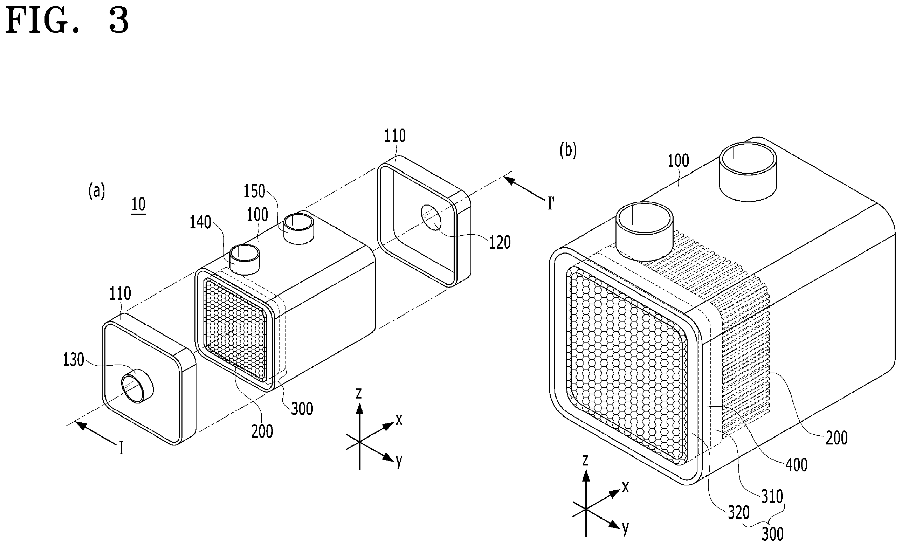

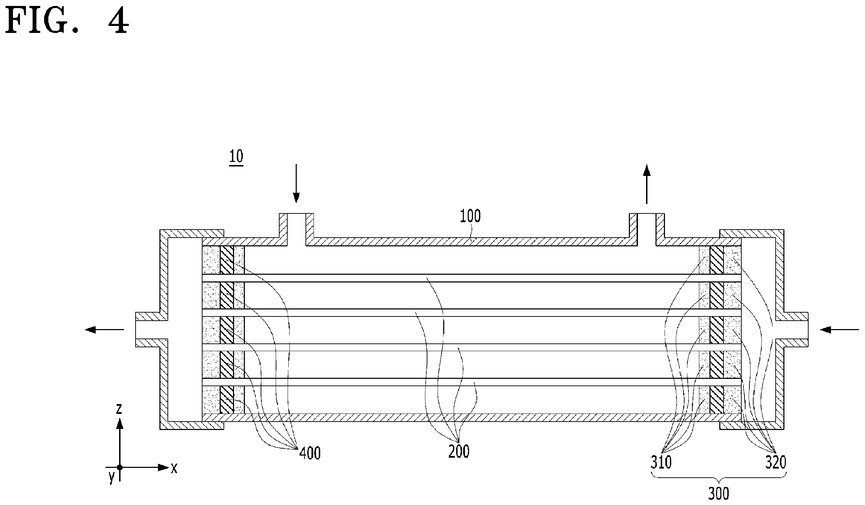

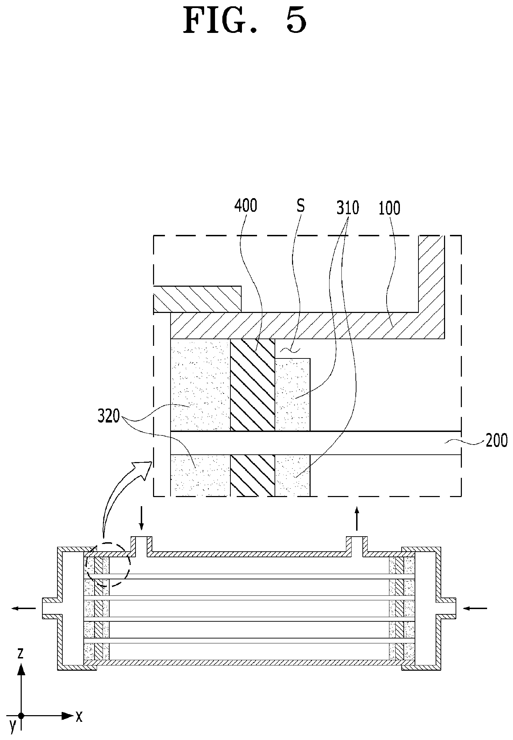

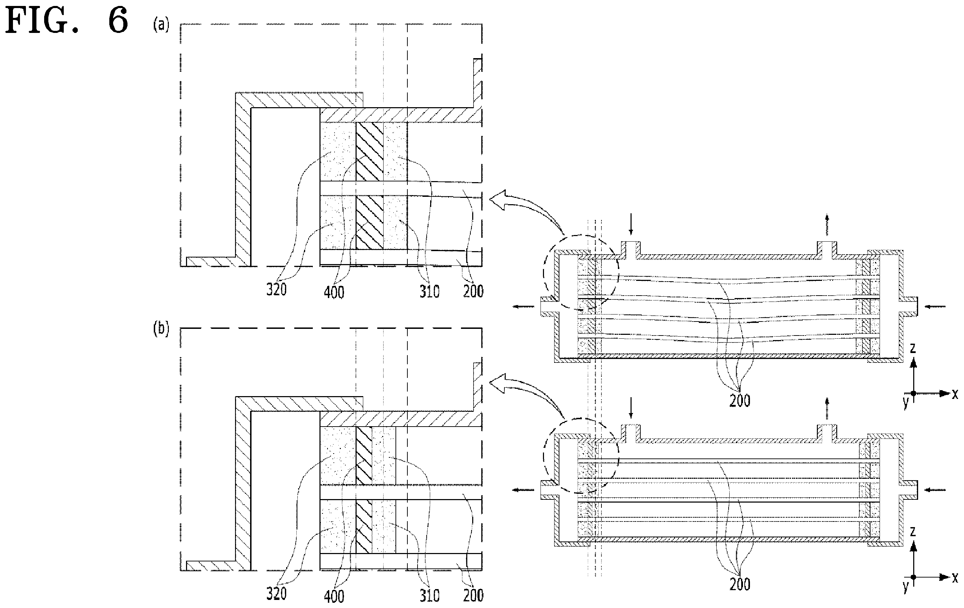

FIG. 3 illustrates an example of a membrane humidifier for a fuel cell with an adjustable length hollow fiber membrane, where view (a) shows an exploded perspective and view (b) shows a partially enlarged perspective. FIG. 4 is a cross-sectional view of a portion cut along line I-I' of FIG. 3. FIG. 5 is a partially enlarged view of the cross-sectional view of FIG. 4. FIG. 6 is a partially enlarged view showing a difference with respect to a temperature in an example of a membrane humidifier for a fuel cell with an adjustable length hollow fiber membrane, according to the present disclosure.

Referring to view (a) of FIG. 3, an embodiment of the present disclosure may include a housing 100, a cap 110 on each side of the housing 100, a dry air inlet 120 provided on the cap 110 on a side to allow dry air to flow thereinto, a dry air outlet 130 provided on the cap 110 on the other side to allow the dry air entering through the dry air inlet 120 to exit after passing through a hollow fiber membrane 200, a moist air inlet 140 provided on an outer circumferential surface of the housing 100 to allow the moist air discharged from a stack (not shown) of fuel cells to flow into the housing 100, a moist air outlet 150 through which the moist air performing humidification inside the housing 100 is discharged, the hollow fiber membrane 200 located inside the housing 100 and inside of which the dry air entering through the dry air inlet 120 flows and outside of which the moist air entering through the moist air inlet 140 flows, such that humidification is performed between the moist air and dry air with the hollow fiber membrane 200 therebetween, and a potting material 300 at opposite ends of the hollow fiber membrane 200 to fix a terminal end of the hollow fiber membrane 200.

The housing 100 may enclose the hollow fiber membrane 200 to protect the same and form an exterior of the membrane humidifier 10, and may have various shapes without being limited to the square pillar shape shown inview (a) of FIG. 3. For example, the housing 100 may have, but is not limited to, a cylindrical shape, a polyprismatic shape, or a polyhedral shape.

The cap 110 may be provided on opposite sides of the housing 100 and may be separated from the housing 100 through which moist air flows, with dry air flowing therein, and a shape thereof may be provided in various shapes.

Referring toview (b) of FIG. 3 and FIG. 4, the hollow fiber membrane 200 may extend across the housing 100, with one end communicating with an inner side of the cap 110 on the dry air inlet 120 side and the other end communicating with the inner side of the cap 110 on the dry air outlet 130 side.

The potting material 300 may be provided at opposite ends of the hollow fiber membrane 200 to fix the terminal end of the hollow fiber membrane 200. The potting material 300 may fix the terminal end of the hollow fiber membrane 200 or the bundle of the hollow fiber membranes 200, while being connected wholly or partially to the housing 100, thereby allowing the hollow fiber membrane 200 to be fixed to and positioned at a predetermined position inside the housing 100.

In an embodiment of the membrane humidifier 10 for the fuel cell with the adjustable length of the hollow fiber membrane according to the present disclosure, a first temperature-sensitive volume-changing member 400 that expands and contracts depending on temperature may be inserted into the potting material 300.

The potting material 300 may be separated by the insertion of the first temperature-sensitive volume-changing member 400, and thus divided into an inner potting material 310 located on an inner side of the housing 100 and an outer potting material 320 located on an outer side of the housing 100 with respect to the first temperature-sensitive volume-changing member 400.

The inner side of the housing 100 may refer to a side closer to the interior of the housing 100 where moist air flows, while the outer side of the housing 100 may refer to a side closer to the interior of the cap 110 where dry air flows.

For example, the potting material 300 may be provided as a plate shape having a predetermined thickness and being perpendicular to the longitudinal direction (the x-axis in view (b) of FIG. 3 and FIG. 4) of the hollow fiber membrane 200, and the first temperature-sensitive volume-changing member 400 may be similarly configured as a plate shape having a thickness less than the potting material 300 and perpendicular to the longitudinal direction (the x-axis in view (b) of FIG. 3 and FIG. 4) of the hollow fiber membrane 200, and may be inserted inside the potting material 300, such that the potting material 300 may be separated into two plates, one of which may be on one side (the +x direction in view (b) of FIG. 3 and FIG. 4) of the first temperature-sensitive volume-changing member 400, and the other of which may be on the other side (the -x direction in view (b) of FIG. 3 and FIG. 4) of the first temperature-sensitive volume-changing member 400.

Referring to FIG. 5, in an embodiment of the present disclosure, the outer potting material 320 may be fixed to the housing 100, and the inner potting material 310 may be spaced apart from the housing 100 with a gap S therebetween.

The outer potting material 320 may enable the hollow fiber membrane 200 to be fixedly included in the housing 100 at a predetermined position or in a predetermined arrangement, prevent moist air entering the housing 100 from escaping through a path other than the moist air outlet 150 by separating the interior and exterior of the housing 100, and prevent dry air between the housing 100 and the cap 110 from entering the interior of the housing 100 through a path other than the hollow fiber membrane 200.

The inner potting material 310 may be spaced apart from the housing 100 with the gap S therebetween in such a way as to move in the longitudinal direction of the hollow fiber membrane 200 along with expansion and contraction of the first temperature-sensitive volume-changing member 400 provided between the outer potting material 320 and the inner potting material 310.

A size of the gap S is preferably provided within a range that does not cause excessive deformation or damage to the hollow fiber membrane 200 because of sagging of the inner potting material 310 and the hollow fiber membrane 200 fixed by the inner potting material 310 due to the gap S.

Accordingly, the inner potting material 310 may move along with the expansion and contraction of the first temperature-sensitive volume-changing member 400, thereby moving the hollow fiber membrane 200 fixed by the inner potting material 310 in the longitudinal direction of the hollow fiber membrane 200, and the movement of the inner potting material 310 provided at each end of the hollow fiber membrane 200 may cause the hollow fiber membrane 200 to be stretched or compressed in the longitudinal direction of the hollow fiber membrane 200, thereby regulating stress applied to the hollow fiber membrane 200.

For example, as shown in FIG. 5, the one-side potting material 300 may be configured to incude the outer potting material 320, the first temperature-sensitive volume-changing member 400, and the inner potting material 310. In the potting material 300, the outer potting material 320 is connected to and fixed to the housing 100. The first temperature-sensitive volume-changing member 400 is provided on the inner side (in the +x direction in FIG. 5) of the fixed outer potting material 320, and the inner potting material 310 may be provided on the inner side (in the +x direction in FIG. 5) of the first temperature-sensitive volume-changing member 400 with a clearance S from the housing 100.

In some cases, an insertion member may be further included that encloses the outer circumferential surface of the inner potting material 310 to fill the gap S between the inner potting material 310 and the housing 100 and has a surface facing the housing 100 and being smooth to enable sliding.

Next, in an embodiment of the membrane humidifier 10 for the fuel cell according to the present disclosure, which allows adjustment of the hollow fiber membrane length, the first temperature-sensitive volume-changing member 400 may be provided with a material that contracts as temperature rises and expands as temperature falls.

For example, the first temperature-sensitive volume-changing member 400 may be provided as a hydrogel that contracts and expands depending on temperature or temperature and moisture, and specific examples thereof may include at least any one selected from a group consisting of poly(N-isopropylacrylamide) (poly(NIPAM)), poly(N-isopropylacrylamide-co-allylamine) (poly(NIPAM-co-AA)), poly(N-isopropyl acrylamide-co-2-(dimethylamino)ethyl methacrylate) (poly(NIPAM-co-DMAEMA)), poly(N-isopropyl acrylamide-co-2-(dimethylamino)ethyl acrylate), poly(NIPAM-co-DMAEA)), poly(N-isopropyl acrylamide-co-acrylic acid), poly(NIPAM-co-AAc)), poly(N-isopropyl acrylamide-co-methacrylic acid) (poly(NIPAM-co-MAAc)), poly(N,N-diethylacrylamide), poly(N-vinylcaprolactam), poly(ethylene glycol), and poly(ethylene glycol-b-propylene glycol-b-ethylene glycol).

However, the present disclosure is not limited thereto.

Referring to FIG. 6, to describe the function and effect of the membrane humidifier 10 for the fuel cell with the adjustable length of the hollow fiber membrane according to the foregoing structure of the present disclosure, FIG. 6A is a view showing a cross-section and a partial enlargement of the membrane humidifier with the elongated hollow fiber membrane 200 due to operation of the fuel cell.

During operation of the fuel cell, the hollow fiber membrane 200 may be subject to continuous downward pressure (in the -z direction in FIG. 6) from the humid air flowing into the housing 100. At the same time, the hollow fiber membrane 200 may vibrate due to the strong flow pressure of the dry air flowing inside the hollow fiber membrane 200, and this vibration may apply stress to the hollow fiber membrane 200.

In particular, as the degree of sagging of the hollow fiber membrane 200 increases, the vibration amplitude increases, intensifying the stress intensity applied to the hollow fiber membrane 200. As the inlet pressure of the humid air and the flow pressure of the dry air increase during high-power operation of the fuel cell, the stress intensity applied to the hollow fiber membrane 200 increases, increasing the likelihood of damage to the hollow fiber membrane 200.

FIG. 6B shows a state when the internal temperature of the housing 100 becomes relatively high due to the high-power operation of the fuel cell.

Referring to FIG. 6B, as the internal temperature of the housing 100 rises, the first temperature-sensitive volume-changing member 400 may contract, causing the inner potting material 310 to move toward the outer potting material 320 connected and fixed to the housing 100.

Thus, the inner potting material 310 at each of opposite ends of the hollow fiber membrane 200 moves toward the outer potting material 320, pulling the hollow fiber membrane 200 fixed to the inner potting material 310 to the opposite ends and restoring the slack hollow fiber membrane 200 to a taut state.

As the hollow fiber membrane 200 is maintained taut, vibration caused by fluid flow may be reduced, thereby alleviating stress on the hollow fiber membrane 200. Ultimately, the durability of both the hollow fiber membrane 200 and the membrane humidifier 10 for the fuel cell may be significantly improved.

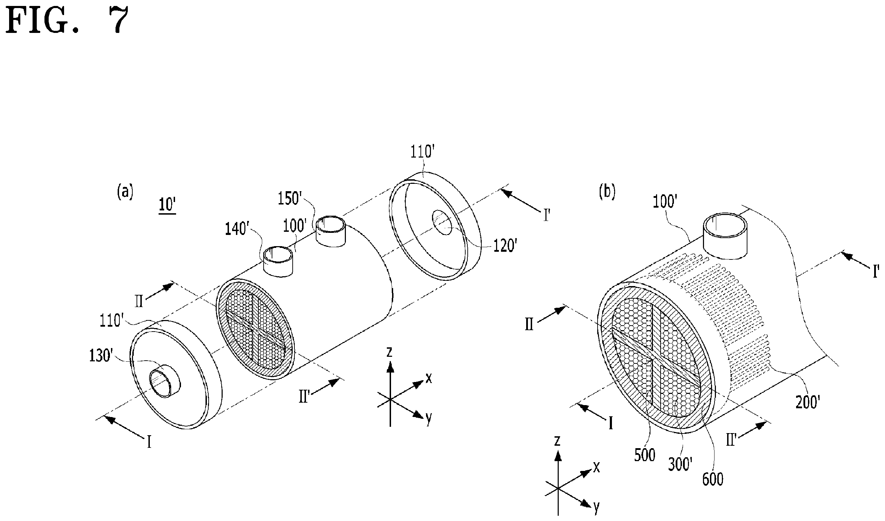

With reference to FIGS. 7 through 9, a membrane humidifier for a fuel cell, which is capable of adjusting a gap between hollow fiber membranes, according to an embodiment of the present disclosure, will now be described.

For components that correspond to the same or simple design modifications as those described in the preceding embodiments and possess the same action, function, and effect, the same reference numerals or subscripts will be used (e.g., 100, 100') to indicate that they may have the same action, function, and effect, and duplicate descriptions will be omitted or minimized.

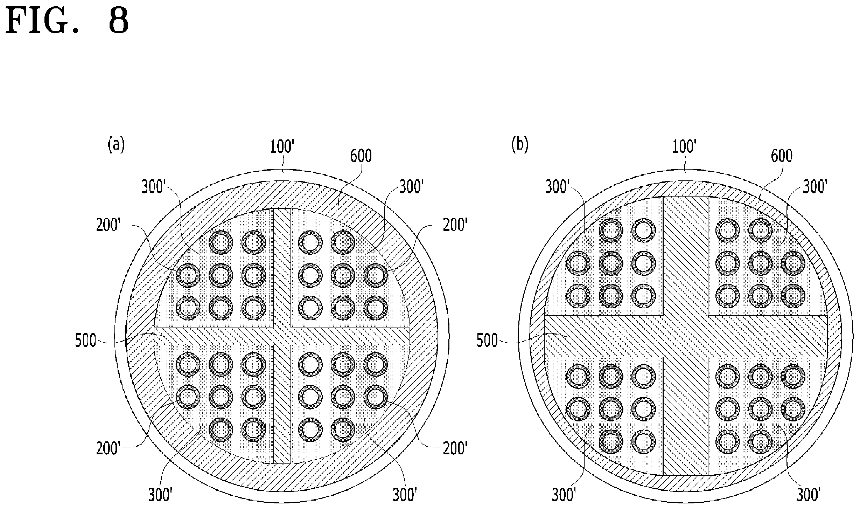

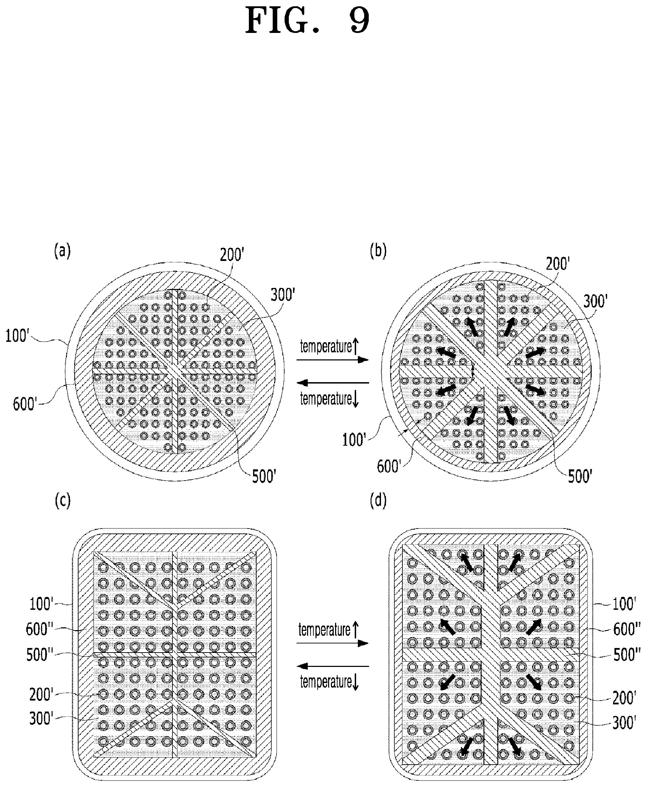

View (a) of FIG. 7 is a perspective view showing an example of a membrane humidifier for a fuel cell with an adjustable gap between hollow fiber membranes, according to the present disclosure. View (b) of FIG. 7 is a partially enlarged view showing an example of a membrane humidifier for a fuel cell with an adjustable gap between hollow fiber membranes, according to the present disclosure. FIG. 8 is a cross-sectional view showing a difference with respect to a temperature for a cross-section cut along line II-II' of FIG. 7 in which view (a) of FIG. 8 is a cross-sectional view in a relatively-low temperature environment due to a low-power operation of a fuel cell and view (b) of FIG. 8 is a cross-sectional view in a relatively-high temperature environment due to a high-power operation of a fuel cell. FIG. 9 is cross-sectional view showing a modified example of a membrane humidifier for a fuel cell with an adjustable gap between hollow fiber membranes, according to the present disclosure.

Referring toview (a) of FIG. 7, an embodiment of the present disclosure may include a housing 100', a cap 110' on each side of the housing 100', a dry air inlet 120' provided on the cap 110' on a side to allow dry air to flow thereinto, a dry air outlet 130' provided on the cap 110' on the other side to allow the dry air entering through the dry air inlet 120' to exit after passing through a hollow fiber membrane 200', a moist air inlet 140' provided on an outer circumferential surface of the housing 100' to allow the moist air discharged from a stack (not shown) of fuel cells to flow into the housing 100', a moist air outlet 150' through which the moist air performing humidification inside the housing 100' is discharged, the hollow fiber membrane 200' located inside the housing 100' and inside of which the dry air entering through the dry air inlet 120' flows and outside of which the moist air entering through the moist air inlet 140' flows, such that humidification is performed between the moist air and dry air with the hollow fiber membrane 200' therebetween, and a potting material 300' at opposite ends of the hollow fiber membrane 200' to fix a terminal end of the hollow fiber membrane 200'.

Referring to view (b) of FIG. 7 and FIG. 8, in an embodiment of the membrane humidifier 10' for the fuel cell with an adjustable gap between hollow fiber membranes according to the present disclosure, a second temperature-sensitive volume-changing member 500 that expands and contracts according to temperature may be inserted into the potting material 300'.

The second temperature-sensitive volume-changing member 500 may divide the potting material 300' into a plurality of pieces, such that each divided piece may be inserted to move apart from and toward each other about an axis parallel to the longitudinal direction of the hollow fiber membrane 200' in response to expansion and contraction of the second temperature-sensitive volume-changing member 500.

For example, as shown in view (b) of FIG. 7, the second temperature-sensitive volume-changing member 500 may be inserted to divide the potting material 300' into four sections on the cross-sectional view cut along line II-II', such that an end of the second temperature-sensitive volume-changing member 500 is exposed to the dry air between the cap 110' and the housing 100' across the potting material 300' in the longitudinal direction (or the x-axis direction of view (b) of FIG. 7) of the hollow fiber membrane 200' and the other end thereof is exposed to the moist air inside the housing 100'. Thus, each divided piece of the potting material 300' may move independently.

However, without being limited thereto, as shown in view (a) of FIG. 9, the potting material 300' may be configured to be divided into eight or more equal pieces. Furthermore, in the manner of dividing the potting material (300'), as shown in view (b) of FIG. 9, the potting material 300' may be divided into pieces differing in size and shape.

At this time, the second temperature-sensitive volume-changing member 500 may include a material that expands as temperature rises and contracts as temperature falls.

The second temperature-responsive volume-changing member 500 may also include a material having a thermal expansion coefficient that is at least 30% greater than that of the potting material 300'. Preferably, the second temperature-responsive volume-changing member 500 may also include a material having a thermal expansion coefficient that is at least 40% greater than that of the potting material 300'. More preferably, the second temperature-responsive volume-changing member 500 may also include a material having a thermal expansion coefficient that is at least 50% greater than that of the potting material 300'.

Accordingly, when the internal temperature of the housing 100' rises due to high-power operation of the fuel cell, the second temperature-sensitive volume-changing member 500 expands, increasing a gap between pieces of the potting material 300' and a gap between the hollow membranes 200' fixed to the potting material 300' and thus enabling smooth humidification to reach the inner side of a bundle of the hollow fiber membranes 200'.

On the other hand, when the internal temperature of the housing 100' falls due to low-power operation of the fuel cell, the second temperature-sensitive volume-changing member 500 may contract relatively and thus the gap between the pieces of the potting material 300' may decrease. The gap between the hollow fiber membranes 200' fixed to the potting material 300' also decreases, such that humidification is mainly performed on the hollow fiber membrane 200' facing the housing 100' and located on the outer side of the housing 100', and humidification to the inner side of the bundle of the hollow fiber membranes 200' is reduced, reducing overall humidification efficiency. As a result, humidification volume during the low-power operation of the fuel cell decreases, thus reducing the likelihood of condensate formation.

When the second temperature-sensitive volume-changing member 500 is provided with a material having a thermal expansion coefficient greater than that of the potting material 300', in a condition where the internal temperature of the housing 100' rises due to the high-power operation of the fuel cell, the second temperature-sensitive volume-changing member 500 may expand more than the potting material 300', effectively widening the gap between the divided pieces of the potting material 300'; in a condition where the internal temperature of the housing 100' falls due to the low-power operation of the fuel cell, the second temperature-sensitive volume-changing member 500 may contract more than the potting material 300', effectively narrowing the gap between the divided pieces of the potting material 300', thereby enabling sensitive humidification tailored to fuel cell's output conditions.

Referring back to view (b) of FIG. 7 and FIG. 8, in an embodiment of the membrane humidifier 10' for the fuel cell with an adjustable gap between hollow fiber membranes according to the present disclosure, a third temperature-sensitive volume-changing member 600 that expands and contracts according to temperature may be inserted between the potting material 300' and the housing 100'.

For example, as shown in view (b) of FIG. 7 and FIG. 8, each of the four pieces divided from the potting material 300' may be provided such that the third temperature-sensitive volume-changing member 600 encloses the surface facing the housing 100'.

The third temperature-sensitive volume-changing member 600 may be provided between the potting material 300' and the housing 100', providing a space allowing the divided pieces of the potting material 300' to be apart from each other when the second temperature-sensitive volume-changing member 500 expands.

To this end, in an embodiment of the membrane humidifier 10' for a fuel cell with an adjustable gap between the hollow fiber membranes according to the present disclosure, the third temperature-sensitive volume-changing member 600 may be provided with a material that contracts as temperature rises and expands as temperature falls.

For example, the third temperature-sensitive volume-changing member 600 may be provided as a hydrogel that contracts as temperature rises and expands as temperature falls, and specific examples thereof may include at least any one selected from a group consisting of poly(N-isopropylacrylamide) (poly(NIPAM)), poly(N-isopropylacrylamide-co-allylamine) (poly(NIPAM-co-AA)), poly(N-isopropyl acrylamide-co-2-(dimethylamino)ethyl methacrylate) (poly(NIPAM-co-DMAEMA)), poly(N-isopropyl acrylamide-co-2-(dimethylamino)ethyl acrylate), poly(NIPAM-co-DMAEA)), poly(N-isopropyl acrylamide-co-acrylic acid), poly(NIPAM-co-AAc)), poly(N-isopropyl acrylamide-co-methacrylic acid) (poly(NIPAM-co-MAAc)), poly(N,N-diethylacrylamide), poly(N-vinylcaprolactam), poly(ethylene glycol), and poly(ethylene glycol-b-propylene glycol-b-ethylene glycol). However, the present disclosure is not limited thereto.

Referring back to FIGS. 8 and 9, to describe the function, action, and effect of the membrane humidifier 10' for the fuel cell with the adjustable gap between hollow fiber membranes according to the present disclosure, the second temperature-sensitive volume-changing member 500, 500', or 500" may be inserted into the potting material 300' to divide the potting material 300' into independent pieces, and the second temperature-sensitive volume-changing member 500, 500', or 500" may include a material that expands as temperature rises and contracts as temperature falls, such that the divided pieces of the potting material 300' may move apart from each other in a relatively-high temperature environment ( view (b) of FIG. 8 and view (b), (d) of FIG. 9) due to the high-power operation of the fuel cell and the divided pieces of the potting material 300' may move toward each other in a relatively-low temperature environment ( view (a) of FIG. 8 and view (a), (c) of FIG. 9) due to the low-power operation of the fuel cell.

The third temperature-sensitive volume-changing member 600, 600', or 600" may be inserted between the housing 100' and the potting material 300', and the third temperature-sensitive volume-changing member 600, 600', or 600" may include a material that contracts as temperature rises and expands as temperature falls to provide a space allowing the pieces of the potting material 300' to move apart from each other during the high-power operation of the fuel cell, and sealing between the potting material 300' and the housing 100' may be maintained during the low-power operation of the fuel cell, thereby preventing the moist air inside the housing 100' and the dry air inside the cap 110' from being mixed with each other.

The gap between the hollow fiber membranes 200' may be adjusted according to the output condition of the fuel cell based on changes in the second temperature-sensitive volume-changing member 500, 500', or 500", the third temperature-sensitive volume-changing member 600, 600', or 600", and the potting material 300'.

Specifically, as the gap between the hollow fiber membrane 200' increases during the high-power operation of the fuel cell, humidification efficiency may be significantly improved through smooth humidification reaching the inner side of the bundle of the hollow fiber membranes 200', reducing humidification efficiency and thus easily improving over-humidification or condensate formation problems mentioned as problems in the low-power section. Accordingly, in an embodiment of the membrane humidifier 10' for a fuel cell with an adjustable gap between the hollow fiber membranes disclosed by the present disclosure, humidification volume may be actively controlled and over-humidification may be prevented, thereby improving the durability of the membrane humidifier for the fuel cell.

Those of ordinary skill in the art to which the present disclosure pertains will appreciate that the present disclosure may be implemented in different detailed ways without departing from the technical spirit or essential characteristics of the present disclosure. Accordingly, the aforementioned embodiments should be construed as being only illustrative, but should not be constructed as being restrictive from all aspects.

For example, although the present disclosure has been described with reference to one embodiment shown in the drawings, it will be understood by those of ordinary skill in the art that various modifications and changes of embodiments may be made therein without departing from the spirit and scope of the present disclosure.

The true scope of the present disclosure is defined by the following claims rather than the detailed description, and the meanings and scope of the claims and all changes or modified forms derived from their equivalents should be construed as falling within the scope of the present disclosure.

## Claims

1. A humidifier for a fuel cell with an adjustable length hollow fiber membrane, the humidifier comprising:
a housing;
the hollow fiber membrane located inside the housing and inside of which dry air flows and outside of which moist air flows; and
a potting material located at opposite ends of the hollow fiber membrane and fixing a terminal end of the hollow fiber membrane,
wherein a first temperature-sensitive volume-changing member that expands and contracts according to temperature is inserted into the potting material such that, with respect to the first temperature-sensitive volume-changing member, the potting material is divided into an inner potting material located on an inner side of the housing and an outer potting material located on an outer side of the housing and spaced apart from the inner potting material.

2. The humidifier of claim 1, wherein the inner potting material is spaced apart from the housing with a gap therebetween in such a way as to move in a longitudinal direction of the hollow fiber membrane along with expansion and contraction of the first temperature-sensitive volume-changing member.

3. The humidifier of claim 1, wherein the outer potting material is fixed to the housing.

4. The humidifier of claim 1, wherein the first temperature-sensitive volume-changing member contracts as temperature rises and expands as temperature falls.

5. The humidifier of claim 1, wherein the first temperature-sensitive volume-changing member comprises at least any one selected from a group consisting of poly(N-isopropylacrylamide) (poly(NIPAM)), poly(N-isopropylacrylamide-co-allylamine) (poly(NIPAM-co-AA)), poly(N-isopropyl acrylamide-co-2-(dimethylamino)ethyl methacrylate) (poly(NIPAM-co-DMAEMA)), poly(N-isopropyl acrylamide-co-2-(dimethylamino)ethyl acrylate), poly(NIPAM-co-DMAEA)), poly(N-isopropyl acrylamide-co-acrylic acid), poly(NIPAM-co-AAc)), poly(N-isopropyl acrylamide-co-methacrylic acid) (poly(NIPAM-co-MAAc)), poly(N,N-diethylacrylamide), poly(N-vinylcaprolactam), poly(ethylene glycol), and poly(ethylene glycol-b-propylene glycol-b-ethylene glycol).

6. A humidifier for a fuel cell with an adjustable gap between hollow fiber membranes, the humidifier comprising:
a housing;
the hollow fiber membrane located inside the housing and inside of which a first fluid flows and outside of which a second fluid flows; and
a potting material located at opposite ends of the hollow fiber membrane and fixing a terminal end of the hollow fiber membrane,
wherein a second temperature-sensitive volume-changing member that expands and contracts according to temperature is inserted into the potting material such that the potting material is divided into a plurality of pieces that move toward or away from each other about an axis parallel to a longitudinal direction of the hollow fiber membrane along with expansion and contraction of the second temperature-sensitive volume-changing member.

7. The humidifier of claim 6, wherein a third temperature-sensitive volume-changing member that expands and contracts according to temperature is inserted between the potting material and the housing in such a way as to surround the potting material.

8. The humidifier of claim 6, wherein the second temperature-sensitive volume-changing member expands as temperature rises and contracts as temperature falls.

9. The humidifier of claim 6, wherein the second temperature-sensitive volume-changing member has a thermal expansion coefficient that is at least 50 % greater than a thermal expansion coefficient of the potting material.

10. The humidifier of claim 7, wherein the third temperature-sensitive volume-changing member contracts as temperature rises and expands as temperature falls.

11. The humidifier of claim 7, wherein the third temperature-sensitive volume-changing member comprises at least any one selected from a group consisting of poly(N-isopropylacrylamide) (poly(NIPAM)), poly(N-isopropylacrylamide-co-allylamine) (poly(NIPAM-co-AA)), poly(N-isopropyl acrylamide-co-2-(dimethylamino)ethyl methacrylate) (poly(NIPAM-co-DMAEMA)), poly(N-isopropyl acrylamide-co-2-(dimethylamino)ethyl acrylate), poly(NIPAM-co-DMAEA)), poly(N-isopropyl acrylamide-co-acrylic acid), poly(NIPAM-co-AAc)), poly(N-isopropyl acrylamide-co-methacrylic acid) (poly(NIPAM-co-MAAc)), poly(N,N-diethylacrylamide), poly(N-vinylcaprolactam), poly(ethylene glycol), and poly(ethylene glycol-b-propylene glycol-b-ethylene glycol).
